(19) Europäisches Patentamt / European Patent Office / Office européen des brevets

(11) **EP 3 789 891 A1**

(12) **EUROPEAN PATENT APPLICATION**

(43) Date of publication:
**10.03.2021 Bulletin 2021/10**

(51) Int Cl.:
**G06F 17/14** (2006.01)   **G06F 7/57** (2006.01)
**G06F 7/72** (2006.01)

(21) Application number: **20195212.4**

(22) Date of filing: **09.09.2020**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **09.09.2019   US 201916565292**

(71) Applicant: **Facebook Inc.**
**Menlo Park, California 94025 (US)**

(72) Inventor: **Ulrich, Thomas Mark**
**Menlo Park, California 94025 (US)**

(74) Representative: **Murgitroyd & Company**
**Murgitroyd House**
**165-169 Scotland Street**
**Glasgow G5 8PL (GB)**

(54) **NUMBER-THEORETIC TRANSFORM HARDWARE**

(57)    A forward number-theoretic transform dedicated hardware unit is configured to calculate a number-theoretic transform of an input vector, wherein a root of unity of the number-theoretic transform performed by the forward number-theoretic transform dedicated hardware unit is a power of two. The forward number-theoretic transform dedicated hardware unit includes data routing paths, a plurality of hardware binary bit shifters, and a plurality of adders.

FIG. 1

EP 3 789 891 A1

**Description**

## BACKGROUND OF THE INVENTION

Convolution is a central operation in many numerical algorithms used in many scientific and engineering computations. For example, convolution is an important component in artificial intelligence computations. Convolution is a computationally intensive operation that oftentimes requires significant hardware resources. Convolution by directly multiplying a convolution kernel is oftentimes not computationally optimal. Approaches based on computing discrete Fourier transforms (DFT) can be more computationally efficient. However, results are not guaranteed to be numerically accurate because the DFT requires multiplication by complex exponentials, which cannot in general be represented as finite-length integers. There exists a need for hardware and techniques to reduce the computational burden of convolution computations while maintaining numerical accuracy.

## SUMMARY OF THE INVENTION

Accordingly, the present invention discloses methods and systems according to the appended claims.
In an aspect, the present invention is directed to a system, comprising:

a first forward number-theoretic transform dedicated hardware unit configured to calculate a number-theoretic transform of a first input vector, wherein a root of unity of the number-theoretic transform performed by the first forward number-theoretic transform dedicated hardware unit is a power of two;
wherein the first forward number-theoretic transform dedicated hardware unit includes:

data routing paths;
a plurality of hardware binary bit shifters; and
a plurality of adders.

In an embodiment of the system according to the present invention, the system may further comprise a second forward number-theoretic transform dedicated hardware unit which may be configured to calculate the number-theoretic transform of a second input vector. In addition, the system may further comprise a first modulo hardware unit and a second modulo hardware unit coupled to the first forward number-theoretic transform dedicated hardware unit and the second forward number-theoretic transform dedicated hardware unit, respectively, wherein the modulo hardware units may be configured to perform modular reductions of outputs of the forward number-theoretic transform dedicated hardware units. The system may further comprise a multiplication hardware unit coupled to the first modulo hardware unit and the second modulo hardware unit, wherein the multiplication hardware unit may be configured to perform element-wise multiplication of outputs of the modulo hardware units. In addition, the system may further comprise an inverse number-theoretic transform dedicated hardware unit, which may be configured to calculate an inverse number-theoretic transform. In addition thereto the inverse number-theoretic transform dedicated hardware unit of the system may further include data routing paths, a plurality of hardware binary bit shifters, a plurality of adders, and a plurality of multipliers.
In an embodiment of the system of the present invention, the first forward number-theoretic transform dedicated hardware unit may further include one or more registers. In addition, the one or more registers may further be configured to store one or more intermediate calculation values.
In an embodiment of the system of the present invention, the data routing paths may be configured to transmit each value of the first input vector to a corresponding bit shifter of the plurality of hardware binary bit shifters and transmit each output of each bit shifter to adders arranged in butterfly structures.
In an embodiment of the system of the present invention, the hardware binary bit shifters may be configured to left shift bits based at least in part on indices associated with the first input vector, indices associated with the number-theoretic transform of the first input vector, and the root of unity of the number-theoretic transform.
In an embodiment of the system of the present invention, the adders may be configured to compute a sum of bit-shifted versions of a plurality of values of the first input vector. In addition thereto, the hardware binary bit shifters and the adders may be arranged in multiple stages, wherein the number of stages may be equal to logarithm base two of the length of the first input vector.
In an embodiment of the system of the present invention, the first input vector may be an input to a circular convolution computation, or the first input vector may be an input to a linear convolution computation, or the first input vector may include a plurality of consecutive zeros inserted at a specified location.
In an embodiment of the system of the present invention the root of unity exponentiated to a power equal to the length of the first input vector may be congruent to one modulo a specified modulus. In addition thereto, the specified modulus may be a prime number.

In an embodiment of the system of the present invention, the first forward number-theoretic transform dedicated hardware unit may include a plurality of dedicated hardware units configured to compute two-point forward number-theoretic transforms and one or more stages of digital logic circuitry configured to combine outputs of the dedicated hardware units configured to compute two-point forward number-theoretic transforms.

In an aspect, the present invention discloses a method, comprising:

receiving input sequences;
computing forward number-theoretic transforms of the input sequences;
performing element-wise multiplication of the transformed input sequences;
computing an inverse number-theoretic transform; and
performing modulo operations on outputs of the forward number-theoretic transforms and the inverse number-theoretic transform.

In an aspect, the present invention further discloses a system comprising:

a first forward number-theoretic transform dedicated hardware unit configured to calculate a number-theoretic transform of a first input vector, wherein a root of unity of the number-theoretic transform performed by the first forward number-theoretic transform dedicated hardware unit is a power of two;
wherein the first forward number-theoretic transform dedicated hardware unit includes:

data routing paths;
a plurality of hardware binary bit shifters; and
a plurality of adders; and

a second forward number-theoretic transform dedicated hardware unit configured to calculate the number-theoretic transform of a second input vector using the root of unity;
wherein the second forward number-theoretic transform dedicated hardware unit includes:

data routing paths;
a plurality of hardware binary bit shifters; and
a plurality of adders.

## BRIEF DESCRIPTION OF THE DRAWINGS

Various embodiments of the invention are disclosed in the following detailed description and the accompanying drawings.

Figure 1 is a block diagram illustrating an embodiment of a system for performing convolutions using number-theoretic transform hardware.

Figures 2A and 2B are diagrams illustrating embodiments of forward number-theoretic transform hardware units.

Figures 3A and 3B are diagrams illustrating embodiments of inverse number-theoretic transform hardware units.

Figure 4 is a flow chart illustrating an embodiment of a process for performing convolutions using number-theoretic transform hardware.

## DETAILED DESCRIPTION

The invention can be implemented in numerous ways, including as a process; an apparatus; a system; a composition of matter; a computer program product embodied on a computer readable storage medium; and/or a processor, such as a processor configured to execute instructions stored on and/or provided by a memory coupled to the processor. In this specification, these implementations, or any other form that the invention may take, may be referred to as techniques. In general, the order of the steps of disclosed processes may be altered within the scope of the invention. Unless stated otherwise, a component such as a processor or a memory described as being configured to perform a task may be implemented as a general component that is temporarily configured to perform the task at a given time or a specific component that is manufactured to perform the task. As used herein, the term 'processor' refers to one or more devices, circuits, and/or processing cores configured to process data, such as computer program instructions.

A detailed description of one or more embodiments of the invention is provided below along with accompanying figures that illustrate the principles of the invention. The invention is described in connection with such embodiments, but the invention is not limited to any embodiment. The scope of the invention is limited only by the claims and the invention encompasses numerous alternatives, modifications and equivalents. Numerous specific details are set forth in the following description in order to provide a thorough understanding of the invention. These details are provided for the purpose of example and the invention may be practiced according to the claims without some or all of these specific details. For the purpose of clarity, technical material that is known in the technical fields related to the invention has not been described in detail so that the invention is not unnecessarily obscured.

A system for performing convolutions using number-theoretic transform hardware is disclosed. The disclosed system includes a forward number-theoretic transform dedicated hardware unit configured to calculate a number-theoretic transform of an input vector, wherein a root of unity of the number-theoretic transform performed by the first forward number-theoretic transform dedicated hardware unit is a power of two. In various embodiments, the forward number-theoretic transform dedicated hardware unit includes data routing paths, a plurality of hardware binary bit shifters, and a plurality of adders. A practical and technological advantage of the disclosed system is improved numerical accuracy compared with other transform approaches to computing convolutions. Furthermore, as described herein, through various hardware implementation measures (e.g., using bit shifters to perform multiplication by powers of two), computational efficiency can be increased.

The disclosed techniques may be applied to convolutions associated with neural networks. Modern deep neural networks include many convolutional layers, which means that neural network inference hardware must spend a large amount of time and power performing convolutions of integer sequences. It is possible to calculate convolutions by directly multiplying each element of a convolution kernel by a corresponding element of the input activation matrix, sum the results, then shift the kernel over, and repeat. However, this is not computationally optimal. Moreover, it is difficult to implement efficiently in an application-specific integrated circuit (ASIC). Since the inputs to the multipliers are different in each cycle, either some multipliers must be left idle or an input flip-flop must be toggled in every cycle, consuming a significant amount of power.

A faster convolution algorithm based on a discrete Fourier transform (DFT) can be used. In this algorithm, the DFT of two input sequences can be computed, the results can be multiplied element-wise, and then an inverse DFT can be computed. However, the result is not guaranteed to be numerically accurate because the DFT requires multiplication by complex exponentials, which cannot in general be represented as finite-length integers. A fast Fourier transform (FFT) algorithm can be used to make the computation of DFTs and inverse DFTs more computationally efficient. Various FFT algorithms may be used (e.g., Cooley-Tukey). The FFT implementation reduces computational complexity of the DFT from $O(N^2)$ to $O(N*logN)$.

To ensure numerical accuracy while still achieving the performance gain of the DFT, a number-theoretic transform (NTT) approach can be used to perform convolutions of integer sequences. Given an input sequence a[n] of size N (other conditions applicable to a[n] are described below), a size-N NTT can be computed as $A[k] = \sum_n a[n]r^{kn}$ where r is a root of unity. An algebraic structure can be chosen such that 2 (or another power of 2) is a root of unity of order N (the size of a[n]). Stated alternatively, in various embodiments, r in the above equation equals 2 or another power of 2. The advantage of r being 2 or another power of 2 is that multiplication by a complex exponential in the DFT can be replaced with multiplication by a power of 2, which can be implemented as a bit shift. An inverse NTT (INTT) can be applied to inverse transform transformed sequences. Stated alternatively, the original sequence a[n] can be recovered by computing $a[n] = \frac{1}{N}\sum_k A[k]r^{-kn}$ (and applying specified modulo operations as described below). The 1/N scaling in the above equation may also be performed during the NTT step without loss of accuracy. As described in further detail herein, integer convolution can be performed by computing NTTs of input sequences, multiplying resulting vectors element-wise, and computing an inverse NTT (INTT). As described in further detail herein, in some embodiments, each NTT and INTT is implemented using a multistage structure similar to that used in various FFT algorithms. The multistage structure NTT / INTT has a computational complexity of $O(N*logN)$.

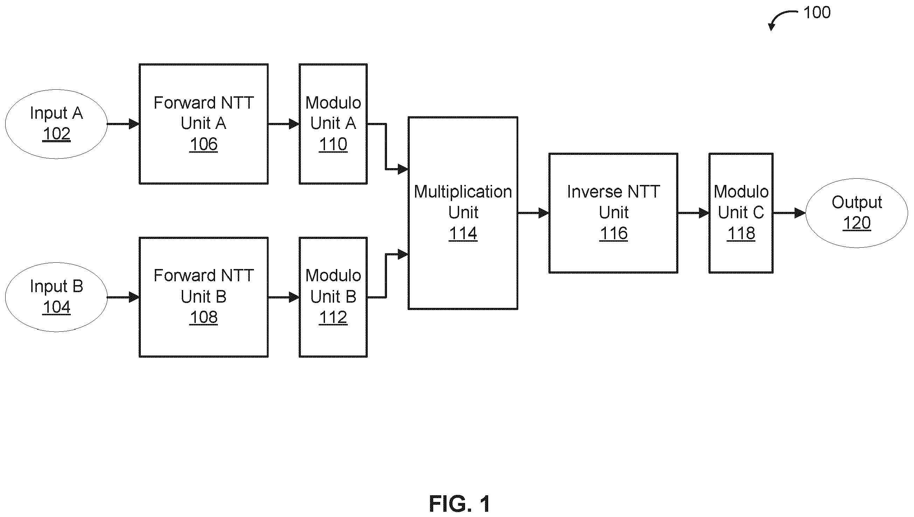

To apply the above transforms, certain parameters need to be chosen, and certain conditions need to be satisfied. The above transforms operate in a ring or finite field that is a modulo p space. A modulus p needs to be chosen such that p is larger than any value in the input sequences to be convolved and larger than any value that can be produced by the convolution. For example, if 8-bit numbers are convolved, p may be chosen to be larger than the square of the largest 8-bit number multiplied by N. The modulus p also depends on the chosen r. As mentioned above, in various embodiments, r is chosen to be 2 or another power of 2 for hardware implementation reasons. The modulus p is chosen such that $r^N$ is congruent to 1 modulo p (thus, r is an Nth root of unity). In equation form, this condition is: $r^N \equiv 1 \bmod p$. For example, if r = 2, then p is chosen such that $2^N \equiv 1 \bmod p$. In addition, because the transforms operate in the modulo p space, modulo p operations are performed after each NTT or INTT (e.g., see Figure 1). These conditions are illustrated in the following numerical example.

The following is a numerical example of performing an NTT on a sequence a[n] to obtain a transformed result A[k] and then performing an INTT to recover a[n]. Suppose a[n] = [1 2]. Thus, N = 2 because the size of a[n] is 2. Suppose that r is chosen to be 2 so that multiplication by 2 can be implemented by shifting bits to the left by one position. The modulus p must be greater than all values in the input and $2^N = 1$ mod p. A modulus p = 3 satisfies these conditions ($2^2 = 4$, which is congruent to 1 mod 3). The NTT is computed as $A[k] = \sum_n a[n]2^{kn}$. A[0] = a[0]*$2^{0*0}$ + a[1]*$2^{0*1}$ = 1*$2^{0*0}$ + 2*$2^{0*1}$ = 1 + 2 = 3. A[1] = a[0]*$2^{1*0}$ + a[1]*$2^{1*1}$ = 1*$2^{1*0}$ + 2*$2^{1*1}$ = 1 + 4 = 5. Thus, A[k] = [3 5]. As mentioned previously, before performing the INTT, a modulo operation is applied (modulo 3 in this case because p = 3). Thus, A[k] = [3 5] ≡ [0 2] mod 3.

The INTT is computed as $a[n] = \frac{1}{N}\sum_k A[k]r^{-kn}$. In this case, $a[n] = \frac{1}{2}\sum_k A[k]2^{-kn}$. Multiplication by ½, which is the same as division by 2, can be implemented by shifting bits to the right by one position. In general, it is also possible to find the inverse of N in the modulo p space and multiply by this inverse. In modulo terms, ½ = $2^{-1}$ (inverse of 2). To find the inverse of 2 in modulo 3 space, a number which when multiplied by 2 is congruent to 1 mod 3 needs to be found. The number 2 satisfies this condition (2*2 = 1 mod 3, meaning the inverse of 2 in modulo 3 space is 2). Thus, in modulo 3 terms, $a[n] = 2\sum_k A[k]2^{-kn}$. Furthermore, $2^{-kn}$ can be written as $(2^{-1})^{kn}$. As described above, $2^{-1}$ (inverse of 2) is congruent to 2 in modulo 3 space. Thus, in modulo 3 terms, $(2^{-1})^{kn}$ is $2^{kn}$. $2^{-1}$ can also just be implemented as a rightward bit shift because negative powers correspond to rightward bit shifts. Consequently, $a[n] = 2\sum_k A[k]2^{kn}$, meaning a[0] = 2 * (A[0]*$2^{0*0}$ + A[1]*$2^{1*0}$) = 2 * (0*1 + 2*1) = 4, and a[1] = 2 * (A[0]*$2^{0*1}$ + A[1]*$2^{1*1}$) = 2 * (0*1 + 2*2) = 8. As with the NTT, a modulo operation (modulo 3 in this case) is applied after taking the INTT. Thus a[n] = [4 8] ≡ [1 2] mod 3. The final recovered result [1 2] matches the original input of [1 2].

The above example is merely illustrative. For example, 1/N does not always equal N, and $r^{-1}$ does not always equal r. The modulus p is oftentimes a prime number. For example, a Mersenne prime may be chosen. But p is not strictly required to be prime. For example, if N = 11, p can be 2047, which is not prime. In various embodiments, different moduli are chosen for different sizes of N. Non-negative integers are used in the above example. Signed integers can also be handled by converting them to unsigned integers by adding an offset. For example, if the modulus is p = 31, the number 31 can be added to negative inputs. Additional logic can be used to convert unsigned convolution results back to signed numbers, e.g., by subtracting an offset.

The following is a numerical example of using NTTs and an INTT to compute a circular convolution of two sequences a[n] and b[n]. In this example, a[n] = [3 12 10], b[n] = [2 0 1 3 0], N = 5, r = 2, and p = $2^5$ - 1 = 31. The expected circular convolution of a[n] and b[n] by performing convolution directly (multiplying a convolution kernel) is c[n] = [13 5 7 12 5]. Using the same transform methodology as in the previous example, the NTTs are A[k] = [7 21 10 0 8] and B[k] = [6 30 24 21 22]. The element-wise product of A[k] and B[k] is C[k] = [11 10 23 0 21] (after taking modulo 31). The constants $N^{-1}$ and $r^{-1}$ can be found by solving for congruences (e.g., solving $N^{-1} * 5 ≡ 1$ mod 31 and $r^{-1} * 2 ≡ 1$ mod 31). Congruences can be solved using various approaches (e.g., exhaustive search, Euclid's algorithm, etc.). In this example, $N^{-1}$ = 25 and $r^{-1}$ = 16. In terms of a hardware implementation, $r^{-1}$ can be implemented efficiently as a right shift of the same number of bits as a left shift corresponding to r because negative powers correspond to rightward bit shifts (in this case, right shift of one bit because r = 2 corresponds to a left shift of one bit). The INTT of C[k] is computed and a final modulo operation is applied (as with the previous example). The end result is c = [13 5 7 12 5], which is the same as performing convolution directly on the input sequences.

In some embodiments, input sequences are zero-padded (e.g., to perform linear convolution instead of circular convolution). This can be important for correct neural network evaluation because a small convolution filter may need to be zero-padded before convolving with a large activation vector. In various embodiments, one or more zeros are inserted into specified locations.

In some embodiments, two-dimensional filtering is performed. For example, with a 5x5 filter, for each of the 5 filter rows, a weight vector can be created in which the first element is the first element of the filter row, the last four elements are the other filter row elements in reverse order, and the rest of the elements are zeros. Stated alternatively, for a filter row [f1 f2 f3 f4 f5], the weight vector would be [f1 0 0 ... 0 0 f5 f4 f3 f2]). Four zeros of padding can be added to the end of the activation vector so that the edges are appropriate (otherwise the circular and linear convolution results will not be equivalent). The convolution can be performed using the standard NTT algorithm.

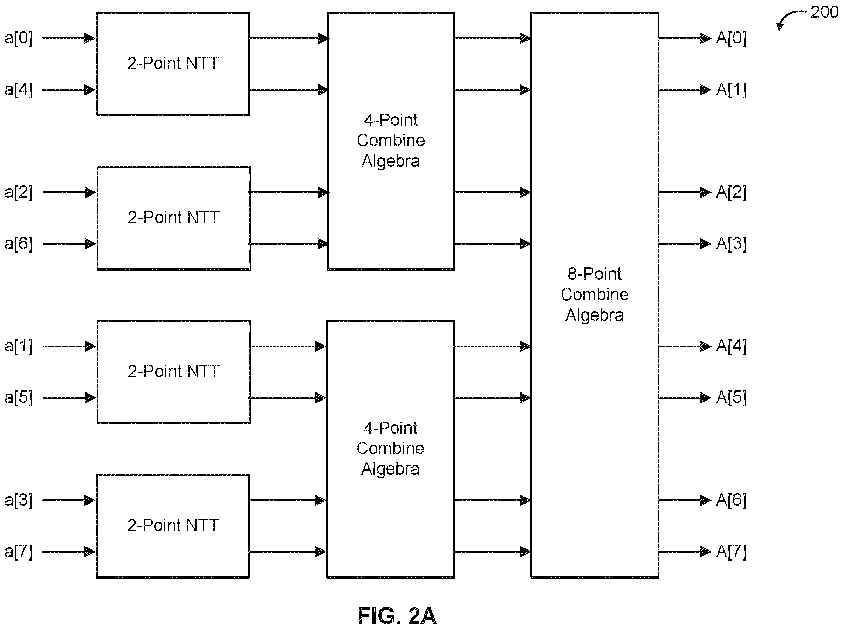

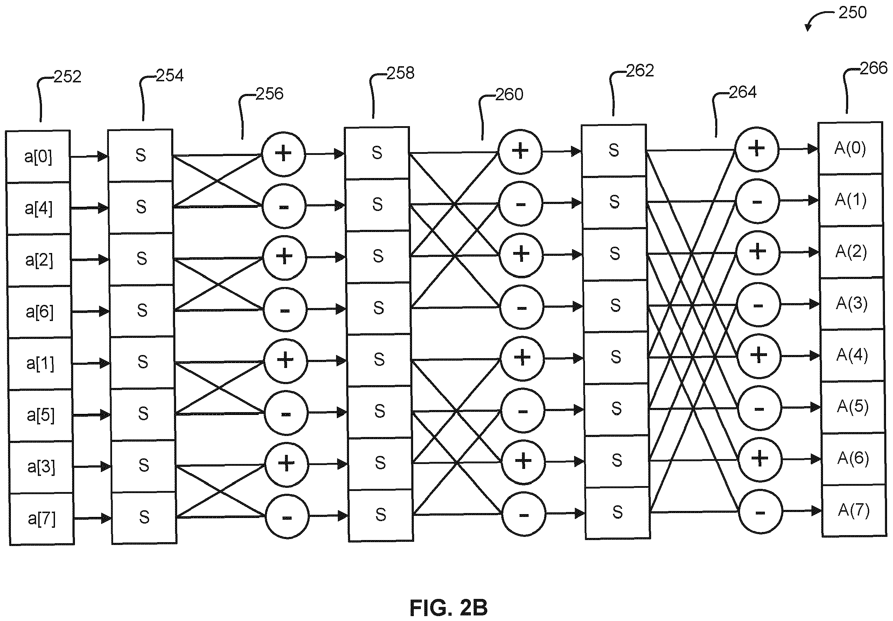

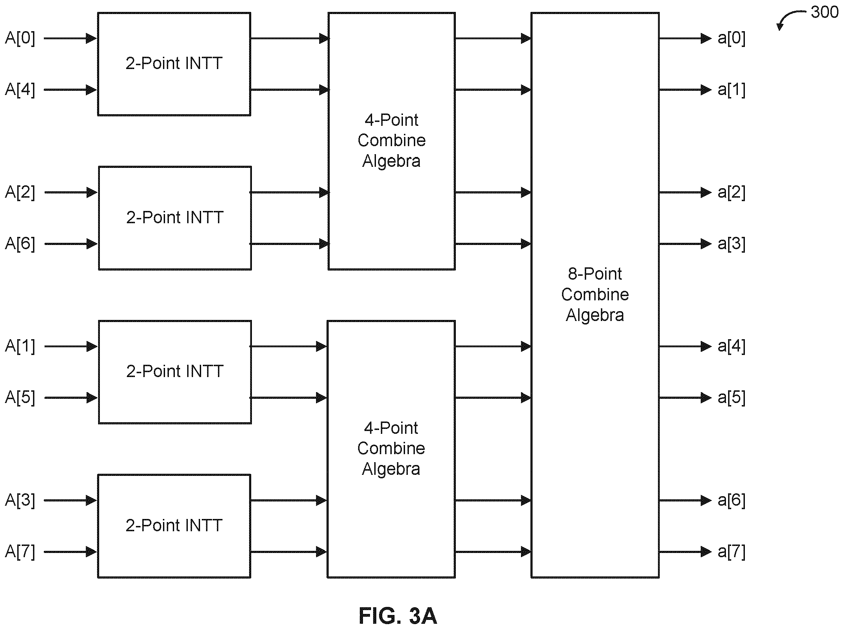

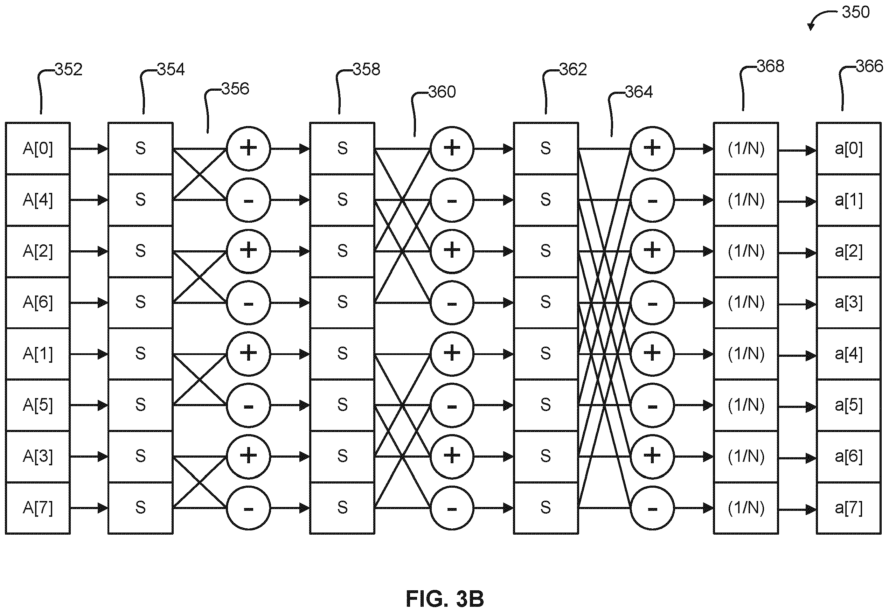

In some embodiments, the above 5x5 filter (for two-dimensional convolution) is handled using a 2D NTT. A 2D NTT is analogous to a 2D DFT. Stated alternatively, the 2D NTT can be performed by performing separate one-dimensional NTTs (along each dimension). The 2D DFT can be implemented using a fast 2D FFT algorithm. A 2D FFT can be implemented by nesting two 1D FFTs. Similarly, the 2D NTT can be implemented by nesting two fast NTTs (e.g., using the multistage structures shown in Figures 2A and 2B for each NTT). The 2D INTT can be implemented by nesting two fast INTTs (e.g., using the multistage structure shown in Figures 3A and 3B for each INTT). Similarly, higher-dimensional convolutions can be performed using NTTs / INTTs by nesting the appropriate number of one-dimensional NTTs and INTTs.

Figure 1 is a block diagram illustrating an embodiment of a system for performing convolutions using number-theoretic transform hardware. NTT convolution system 100 produces output 120 from input A 102 and input B 104. In some embodiments, input A 102 and input B 104 are length-N sequences of integers. In some embodiments, output 120 is the length-N convolution of input A 102 and input B 104 (e.g., circular convolution if the inputs are not zero-padded or linear convolution if the inputs are zero-padded). Input A 102 and input B 104 may be zero-padded with different numbers of zeros (e.g., if the underlying sequences are different sizes). N may be chosen to be large enough to accommodate zero-padding of inputs to perform linear convolution. Zero-padding is well-known in the art. NTT convolution system 100 may be implemented as multiple instances in which each instance is configured for a different value of N. In various embodiments, r and p (as used from above) are tailored to each N. See the description above for details on how r and p are chosen.

The example shown in Figure 1 includes forward NTT unit A 106, forward NTT unit B 108, modulo unit A 110, modulo unit B 112, multiplication unit 114, inverse NTT unit 116, and modulo unit C 118. Forward NTT unit A 106 performs an NTT on input A 102. Forward NTT unit B 108 performs an NTT on input B 104. In various embodiments, each forward NTT unit includes a plurality of hardware binary bit shifters, a plurality of adders, and data routing paths. Data registers that store temporary values (e.g., intermediate calculation results) may also be included. In some embodiments, at least a portion of forward NTT unit A 106 is forward NTT unit 200 of Figure 2A. In some embodiments, at least a portion of forward NTT unit B 108 is forward NTT unit 200 of Figure 2A. In some embodiments, at least a portion of forward NTT unit A 106 is forward NTT unit 250 of Figure 2B. In some embodiments, at least a portion of forward NTT unit B 108 is forward NTT unit 250 of Figure 2B.

In the example shown, modulo unit A 110 and modulo unit B 112 perform modular reductions of the transform of input 102 A and the transform of input 104 B, respectively. Modulo unit C 118 performs a similar modular reduction of the output of inverse NTT unit 116 (see below). Modulo operations are computationally inexpensive (e.g., compared to multiplications) and can be made more efficient through specialized logic adapted to specific moduli. For example, modulo 31 (used as an example p above) of any binary number x can be simplified by recognizing that x can be written as $x = 32 * x_1 + x_2$, where $x_2$ is the lower 5-bit portion of x and $x_1$ is the upper-bits portion of x. Thus, x mod 31 can be written as $(32 * x_1)$ mod 31 + $(x_2)$ mod 31, which simplifies to $(1 * x_1)$ mod 31 + $(x_2)$ mod 31 (because 32 mod 31 = 1). The above further simplifies to $(x_1 + x_2)$ mod 31. If $x_1 + x_2$ equals 31, the final result is 0. If $x_1 + x_2$ is less than 31, the final result is $x_1 + x_2$. If $x_1 + x_2$ is larger than 31, the above technique of breaking that number into a lower 5-bit portion and an upper-bits portion can be used again (repeatedly until $x_1 + x_2$ is less than or equal to 31). Similar simplifications and optimizations can be used for other moduli.

Thus, modular reduction can be simplified into primarily addition operations (e.g., implemented as adders using basic digital logic gates). In various embodiments, modular reduction is implemented using digital electronic circuits (e.g., assemblies of digital logic gates printed on integrated circuits). In some embodiments, each modulo unit (e.g., modulo unit A 110, modulo unit B 112, and modulo unit C 118) includes N instances of modular reduction logic in order to perform N modular reductions in parallel (due to there being N output values for each NTT or INTT). Modular reduction may also be performed using well-known modular reduction methods in the art (e.g., classical method, Barrett method, Montgomery method, etc.). Additional modulo units to perform additional modular reductions may be placed at various points in the data paths of the example shown in Figure 1 without affecting the accuracy of the results (e.g., at the output of multiplication unit 114, within the forward and inverse NTT units, etc.). The accuracy of the results is not affected due to basic modulo operation properties (e.g., modular reduction can be performed before or after addition and/or multiplication without affecting the results).

In the example shown, multiplication unit 114 performs element-wise multiplication of the outputs of modulo unit A 110 and modulo unit B 112. For example, if the outputs of modulo unit A 110 and modulo unit B 112 are length-N vectors of 8-bit integers (because input A 102 and input B 104 are such vectors), multiplication unit 114 could include N 8-bit multipliers to perform N 8-bit multiplications. In various embodiments, multiplication unit 114 is implemented using digital electronic circuits (e.g., assemblies of digital logic gates printed on integrated circuits). Various implementations of multipliers that are known in the art (e.g., serial multipliers, pipelined multipliers, combinatorial multipliers, etc.) may be used. An advantage of NTT convolution system 100 is that fewer full multiplications (e.g., N multiplication in the example shown) are needed than when performing convolution directly (e.g., approximately $N^2$ multiplications for convolution of two length-N sequences). This is advantageous because these multiplications are typically computationally expensive.

In the example shown, inverse NTT unit 116 performs an INTT on the output of multiplication unit 114. In various embodiments, inverse NTT unit 116 includes a plurality of hardware binary bit shifters, a plurality of adders, a plurality of multipliers to perform multiplication by 1/N if 1/N is not a power of 2 (binary bit shifters otherwise), and data routing paths. The plurality of hardware binary bit shifters implements multiplication by $r^{-1}$ (division by r). When r is a power of 2, division by r can be implemented as a right shift of the same number of bits as a left shift corresponding to multiplication by r because negative powers correspond to rightward bit shifts. At least one data register (e.g., to store temporary values) may also be included. In some embodiments, at least a portion of inverse NTT unit 116 is inverse NTT unit 300 of Figure 3A. In some embodiments, at least a portion of inverse NTT unit 116 is inverse NTT unit 350 of Figure 3B. In the example shown, modulo unit C 118 performs a final modular reduction of the output of inverse NTT unit 116. In some embodiments, modulo unit A, modulo unit B, and modulo unit C have identical or nearly identical implementations.

In the example illustrated in Figure 1, portions of the communication path between the components are shown. Other communication paths may exist, and the example of Figure 1 has been simplified to illustrate the example clearly. Although single instances of components have been shown to simplify the diagram, additional instances of any of the components shown in Figure 1 may exist. The number of components and the connections shown in Figure 1 are merely illustrative. For example, additional instances of inputs, forward NTT units, multiplication units, modulo units, inverse NTT units, and outputs may be used to allow for more parallel processing. Components not shown in Figure 1 may also exist. For example, buffers for storing intermediate results may be used.

Figures 2A and 2B are diagrams illustrating embodiments of forward number-theoretic transform hardware units. It is possible to implement the transform $A[k] = \sum_n a[n]r^{kn}$ by directly translating the transform equation into hardware components, wherein each multiplication by a power of r corresponds to a bit shifter (if r is a power of two) and the summation operator corresponds to an adder tree. However, as described below, a more efficient implementation includes a multistage and/or butterfly approach used in many FFT implementations. In the examples shown, a sequence of 8 values a[n] is transformed into a length-8 sequence A[k]. In some embodiments, each value of a[n] is stored in a data register. In some embodiments, each data register is larger than each a[n] value (e.g., can store more bits than are in each a[n] value) in order to accommodate subsequent bit shifting.

Figure 2A illustrates an example implementation of a length-8 forward NTT unit that includes multiple processing stages. Forward NTT unit 200 includes four 2-point NTT units, 4-point combine logic, and 8-point combine logic. Forward NTT unit 200 can be implemented on an ASIC, a field-programmable gate array (FPGA), other programmable logic devices, and so forth. As with the DFT, the NTT $A[k] = \sum_n a[n]r^{kn}$ can be decomposed into an even and an odd portion:

$$A[k] = \sum_m a[2m]r^{2mk} + \sum_m a[2m+1]r^{(2m+1)k} \text{ (for m = 0 to N/2 − 1,}$$

substituting n = 2m in the first sum and m = 2m + 1 in the second sum). The above equation simplifies to $\sum_m a[2m]r^{2mk} + r^k \sum_m a[2m+1]r^{2mk}$, which has the form of two smaller NTTs that are combined with the combining algebra $r^k$. The two smaller NTTs can each be decomposed again, and the decomposition can continue until 2-point NTTs are reached.

This decomposition is analogous to decimation-in-time FFT algorithms. Instead of a twiddle factor $W_N^k$ used to combine stages in FFT implementations, $r^k$ is used to provide combining algebra. A length-8 NTT is decomposable into 8-point combine algebra and two 4-point NTTs. Each 4-point NTT is decomposable into 4-point combine algebra and two 2-point NTTs. Thus, the example illustrated includes 2-point NTTs, 4-point combine algebra, and 8-point combine algebra. In some embodiments, intermediate results are stored in data registers for temporary storage.

Figure 2B illustrates an example implementation of a length-8 forward NTT unit. Forward NTT unit 250 includes a plurality of hardware binary bit shifters and adders connected in a butterfly structure used in some FFT implementations. In the example shown, inputs 252 are processed via $\log_2 N$ (3 in this case) stages of bit shift and addition operations to produce outputs 266. The first stage includes bit shifters 254 and addition butterflies 256. The second stage include bit shifters 258 and addition butterflies 260. The third stage includes bit shifters 262 and addition butterflies 264. Some of the bit shifters may simply be wire connections if the required bit shift is 0 bits. The butterfly patterns correspond to an 8-point decimation-in-time FFT. Other butterfly patterns are also possible.

In various embodiments, bit shifters shift bits according to the index value of a[n] and the index value k of A[k] being computed. For example, if r = 2, $A[k] = \sum_n a[n]2^{kn}$, meaning that shifts of k*n for various values of k and n are possible. The shifts are leftward shifts because multiplication by each power of 2 in binary corresponds to a single left shift. In various embodiments, the number of distinct shifts that need to be implemented is no greater than N because powers greater than N can be simplified by using the condition / property $r^N \equiv 1 \bmod p$. For example, $r^{N+1} = r^N * r^1$, which corresponds to a single left shift when r = 2. In various embodiments, bit shifting is implemented as a collection of wires routing bit values to different locations. Various other bit shifting implementations known in the art can be used for the bit shifters (e.g., multiplexer implementations, sequential logic, etc.). In some embodiments, the bit shifted versions of values are outputted to separate data registers.

In the example shown, in each stage, adders sum the outputs of bit shifters. For example, adders in addition butterflies 256 sum the outputs of bit shifters 254. Some of the operations are shown as subtractions. Subtractions may be implemented with adders by adding negative values (subtraction being the addition of negative values). Addition and subtraction are both referred to herein as addition operations performed by adders. In various embodiments, the adders are implemented using basic combinatorial digital electronic circuits. In some embodiments, addition outputs are stored in data registers. It is also possible to use temporary storage registers to hold intermediate calculation results and then place those results back into their original storage locations to reduce the number of data registers used.

In the example shown, the final output is the transformed sequence A[k]. An advantage of performing the forward NTT transform using a base r that is a power of 2 is that multiplications by powers of 2 can be implemented with bit shifters, which are inexpensive in terms of hardware resources compared with multipliers. In some embodiments, forward NTT unit 200 is implemented as an ASIC. It is also possible to implement forward NTT unit 200 on an FPGA or on other programmable logic devices.

The example shown is illustrative and not restrictive. Other implementations are possible. Although the illustrated example shows a length-8 NTT hardware implementation, the illustrated example can be readily adapted for other length NTTs by including more bit shifters and adders. If N is a power of 2, the number of stages of bit shifters and adders would be $\log_2 N$. In some embodiments, multiple types of NTT units (e.g., computing NTTs of different lengths) are implemented on the same ASIC, FPGA, etc.

Figures 3A and 3B are diagrams illustrating embodiments of inverse number-theoretic transform hardware units. As with the forward NTT, it is possible to implement the inverse NTT $a[n] = \frac{1}{N}\sum_k A[k]r^{-kn}$ by directly translating the inverse transform equation into hardware components, wherein each multiplication by a power of $r^{-1}$ corresponds to a bit shifter (if r is a power of two) and the summation operator corresponds to an adder tree. However, as with the forward NTT, a more efficient implementation includes a multistage and/or butterfly approach used in many FFT implementations.

Figure 3A illustrates an example implementation of a length-8 inverse NTT unit that includes multiple processing stages. Inverse NTT unit 300 includes four 2-point INTT units, 4-point combine logic, and 8-point combine logic. Inverse NTT unit 300 can also be implemented on an ASIC, FPGA, and so forth. Inverse NTT unit 300 has the same basic structure as forward NTT unit 200 of Figure 2A. The difference (based on differences in the definitions of the forward NTT and the inverse NTT) is that for inverse NTT unit 300, the combining algebra uses $r^{-k}$ instead of $r^k$ and the output is scaled by 1/N. This is analogous to modifying an FFT implementation to obtain an inverse FFT implementation. A length-8 INTT is decomposable into 8-point combine algebra and two 4-point INTTs. Each 4-point INTT is decomposable into 4-point combine algebra and two 2-point INTTs. Thus, the example illustrated includes 2-point INTTs, 4-point combine algebra, and 8-point combine algebra. In some embodiments, the scaling of the output by 1/N is performed within the 8-point combine algebra (e.g., at the end). In some embodiments, intermediate results are stored in data registers for temporary storage.

Figure 3B illustrates an example implementation of a length-8 inverse NTT unit. Inverse NTT unit 350 includes a plurality of hardware binary bit shifters and adders connected in a butterfly structure used in some IFFT implementations. In the example shown, inputs 352 are processed via $\log_2 N$ (3 in this case) stages of bit shift and addition operations to produce outputs 366. The first stage includes bit shifters 354 and addition butterflies 356. The second stage include bit shifters 358 and addition butterflies 360. The third stage includes bit shifters 362 and addition butterflies 364. Some of the bit shifters may simply be wire connections if the required bit shift is 0 bits. The butterfly patterns correspond to an 8-point decimation-in-time IFFT. Other butterfly patterns are also possible. Inverse NTT unit 350 includes multipliers 368 that perform (1/N) scaling. In the example illustrated, this scaling occurs after the bit shift and addition stages. Alternatively, the scaling may be performed at various other points in the processing (e.g., after intermediate bit shift and addition stages, after receiving the inputs, etc.). The scaling may also be performed in the forward NTT unit of the NTT / INTT pair.

Inverse NTT unit 350 implements the inverse transform $a[n] = \frac{1}{N}\sum_k A[k]r^{-kn}$ and includes a plurality of bit shifters, adders, and multipliers. In the example shown, inputs 352 is a sequence of 8 values A[k] to be inverse transformed into a length-8 sequence a[n]. In some embodiments, each value of A[k] is stored in a data register. In some embodiments, each data register is larger than each A[k] value (e.g., can store more bits than are in each A[k] value) in order to accommodate subsequent bit shifting.

In various embodiments, bit shifters shift bits according to the index value of A[k] and the index value n of a[n] being computed. In various embodiments, the shifts are rightward shifts because multiplication by each negative power of 2 in binary corresponds to a single right shift. In various embodiments, the number of distinct shifts that need to be implemented is no greater than N because powers greater than N can be simplified by using the condition / property $r^N \equiv 1 \bmod p$ (see description for Figure 2B). In various embodiments, bit shifting is implemented as a collection of wires routing bit values to different locations. Various other bit shifting implementations known in the art can be used for the bit shifters (e.g., multiplexer implementations, sequential logic, etc.). In some embodiments, the bit shifted versions of values are outputted to separate data registers.

In the example shown, in each stage, adders sum the outputs of bit shifters. For example, adders in addition butterflies 356 sum the outputs of bit shifters 354. Some of the operations are shown as subtractions. Subtractions may be implemented with adders by adding negative values (subtraction being the addition of negative values). In various embodiments, the adders are implemented using basic combinatorial digital electronic circuits. In some embodiments, addition outputs are stored in data registers. It is also possible to use temporary storage registers to hold intermediate calculation results and then place those results back into their original storage locations to reduce the number of data registers used.

In the example shown, multipliers 368 multiply the outputs of addition butterflies 364 by 1/N, which in this specific example is 1/8 because N = 8. As illustrated in an above example, $1/N = N^{-1}$, which is the inverse of N in modulo p space (p being the modulus chosen for the specific NTT and INTT pair being used). In modulo p space, the inverse of N is a number, which when multiplied by N, is congruent to 1 mod p. In various embodiments, 1/N is precalculated based on p. In various embodiments, multipliers 368 are implemented using digital electronic circuits (e.g., assemblies of digital logic gates printed on integrated circuits). Various implementations of multipliers that are known in the art (e.g., serial multipliers, pipelined multipliers, combinatorial multipliers, etc.) may be used. If 1/N happens to be a power of 2 in modulo p space, then bit shifters can be used instead of multipliers.

In the example shown, the final output is the inverse transformed sequence a[n]. An advantage of performing the inverse NTT with bit shifters is that bit shifters are inexpensive in terms of hardware resources compared with multipliers. In some embodiments, inverse NTT unit 350 is implemented as an ASIC. It is also possible to implement inverse NTT unit 350 on an FPGA or on other programmable logic devices.

The example shown is illustrative and not restrictive. Other implementations are possible. Although the illustrated example shows a length-8 INTT hardware implementation, the illustrated example can be readily adapted for other length INTTs by including more bit shifters and adders. If N is a power of 2, the number of stages of bit shifters and adders would be $\log_2 N$. In some embodiments, multiple types of INTT units (e.g., computing INTTs of different lengths) are implemented on the same ASIC, FPGA, etc.

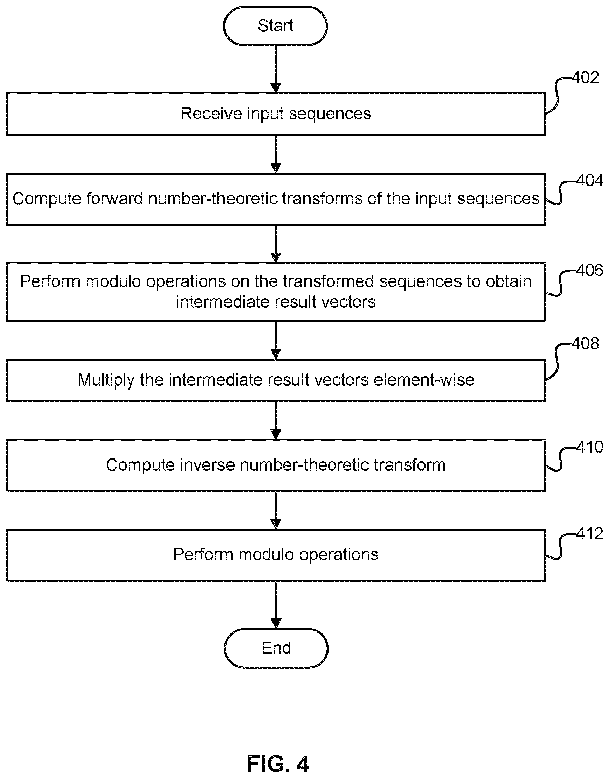

Figure 4 is a flow chart illustrating an embodiment of a process for performing convolutions using number-theoretic transform hardware. In some embodiments, the process of Figure 4 is performed by NTT convolution system 100 of Figure 1.

At 402, input sequences are received. In some embodiments, the input sequences are two length-N sequences of integers. The input sequences may already be zero-padded (e.g., to perform linear convolution). It is also possible to zero-pad the input sequences after they are received. In some embodiments, the input sequences are received by forward NTT unit A 106 and forward NTT unit B 108 of Figure 1.

At 404, forward number-theoretic transforms of the input sequences are computed. In some embodiments, the forward number-theoretic transforms are performed by forward NTT unit A 106 and forward NTT unit B 108 of Figure 1. In various embodiments, each forward NTT unit includes a plurality of hardware binary bit shifters, a plurality of adders, and data routing paths. In some embodiments, forward NTT transforms are performed by bit shifting and adding input values to compute each value in the transformed sequences (analogous to an FFT approach). This results in performing on the order of N*logN bit shifts for each NTT.

At 406, modulo operations are performed on the transformed sequences to obtain intermediate result vectors. In various embodiments, the modulo operations are modular reductions using a modulus p that is pre-chosen based on the length N of the input sequences. Furthermore, in various embodiments, p is chosen to be larger than any value in the input sequences to be convolved and larger than any value that can be produced by the convolution of the input sequences. In various embodiments, the modulus p satisfies $r^N \equiv 1 \bmod p$, where r is a power of 2. In various embodiments, modular reductions are performed on each value in the transformed sequences.

At 408, the intermediate result vectors are multiplied element-wise. For example, if the intermediate result vectors each have N 8-bit integer values, the output of the multiplication would have N values that are 8-bit by 8-bit multiplied. It is also possible at this point in the processing to perform modular reductions on the output of the multiplication without affecting accuracy.

At 410, an inverse number-theoretic transform is computed. The inverse number-theoretic transform is performed using the element-wise multiplied vector as the input. In some embodiments, the inverse number-theoretic transform is performed by inverse NTT unit A 116 of Figure 1. In various embodiments, the inverse NTT unit includes a plurality of hardware binary bit shifters, a plurality of adders, a plurality of multipliers, and data routing paths. In some embodiments, the inverse NTT transform is performed by using a multistage implementation analogous to inverse FFT multistage implementations, which can result in needing on the order of N*logN bit shifts for each INTT.

At 412, modulo operations are performed. In various embodiments, the modulo operations are modular reductions performed on each value of the output of the INTT step above. The same modulus p used in step 406 is used for the modular reductions in this step.

Although the foregoing embodiments have been described in some detail for purposes of clarity of understanding, the invention is not limited to the details provided. There are many alternative ways of implementing the invention. The disclosed embodiments are illustrative and not restrictive.

**Claims**

1.  A system, comprising:

    a first forward number-theoretic transform dedicated hardware unit configured to calculate a number-theoretic transform of a first input vector, wherein a root of unity of the number-theoretic transform performed by the first forward number-theoretic transform dedicated hardware unit is a power of two;
    wherein the first forward number-theoretic transform dedicated hardware unit includes:

    data routing paths;
    a plurality of hardware binary bit shifters; and
    a plurality of adders.

2.  The system of claim 1, further comprising a second forward number-theoretic transform dedicated hardware unit configured to calculate the number-theoretic transform of a second input vector.

3.  The system of claim 2, further comprising a first modulo hardware unit and a second modulo hardware unit coupled to the first forward number-theoretic transform dedicated hardware unit and the second forward number-theoretic transform dedicated hardware unit, respectively, wherein the modulo hardware units are configured to perform modular reductions of outputs of the forward number-theoretic transform dedicated hardware units.

4.  The system of claim 3, further comprising a multiplication hardware unit coupled to the first modulo hardware unit and the second modulo hardware unit, wherein the multiplication hardware unit is configured to perform element-wise multiplication of outputs of the modulo hardware units.

5.  The system of claim 4, further comprising an inverse number-theoretic transform dedicated hardware unit configured to calculate an inverse number-theoretic transform.

6.  The system of claim 5, wherein the inverse number-theoretic transform dedicated hardware unit includes data routing paths, a plurality of hardware binary bit shifters, a plurality of adders, and a plurality of multipliers.

7.  The system of claim 1, wherein the first forward number-theoretic transform dedicated hardware unit includes one or more registers, and, optionally, wherein the one or more registers are configured to store one or more intermediate calculation values.

8.  The system of claim 1, wherein the data routing paths are configured to transmit each value of the first input vector to a corresponding bit shifter of the plurality of hardware binary bit shifters and transmit each output of each bit shifter to adders arranged in butterfly structures.

9.  The system of claim 1, wherein the hardware binary bit shifters are configured to left shift bits based at least in part on indices associated with the first input vector, indices associated with the number-theoretic transform of the first input vector, and the root of unity of the number-theoretic transform.

10. The system of claim 1, wherein the adders are configured to compute a sum of bit-shifted versions of a plurality of values of the first input vector, and, optionally, wherein the hardware binary bit shifters and the adders are arranged in multiple stages, wherein the number of stages is equal to logarithm base two of the length of the first input vector.

11. The system of claim 1, wherein the first input vector is an input to a circular convolution computation, or wherein the first input vector is an input to a linear convolution computation, or wherein the first input vector includes a plurality of consecutive zeros inserted at a specified location.

12. The system of claim 1, wherein the root of unity exponentiated to a power equal to the length of the first input vector is congruent to one modulo a specified modulus., and, optionally, wherein the specified modulus is a prime number.

13. The system of claim 1, wherein the first forward number-theoretic transform dedicated hardware unit includes a plurality of dedicated hardware units configured to compute two-point forward number-theoretic transforms and one or more stages of digital logic circuitry configured to combine outputs of the dedicated hardware units configured to compute two-point forward number-theoretic transforms.

**14.** A method, comprising:

receiving input sequences;
computing forward number-theoretic transforms of the input sequences;
performing element-wise multiplication of the transformed input sequences;
computing an inverse number-theoretic transform; and
performing modulo operations on outputs of the forward number-theoretic transforms and the inverse number-theoretic transform.

**15.** A system, comprising:

a first forward number-theoretic transform dedicated hardware unit configured to calculate a number-theoretic transform of a first input vector, wherein a root of unity of the number-theoretic transform performed by the first forward number-theoretic transform dedicated hardware unit is a power of two;
wherein the first forward number-theoretic transform dedicated hardware unit includes:

data routing paths;
a plurality of hardware binary bit shifters; and
a plurality of adders; and

a second forward number-theoretic transform dedicated hardware unit configured to calculate the number-theoretic transform of a second input vector using the root of unity;
wherein the second forward number-theoretic transform dedicated hardware unit includes:

data routing paths;
a plurality of hardware binary bit shifters; and
a plurality of adders.

**FIG. 1**

**FIG. 2A**

**FIG. 2B**

A[0] → | 2-Point INTT |
A[4] → | |

A[2] → | 2-Point INTT |
A[6] → | |

A[1] → | 2-Point INTT |
A[5] → | |

A[3] → | 2-Point INTT |
A[7] → | |

4-Point Combine Algebra

4-Point Combine Algebra

8-Point Combine Algebra

→ a[0]
→ a[1]
→ a[2]
→ a[3]
→ a[4]
→ a[5]
→ a[6]
→ a[7]

300

**FIG. 3A**

FIG. 3B

```
                          ┌─────────────┐
                          │    Start    │
                          └─────────────┘
                                 │
                                 ▼
┌──────────────────────────────────────────────────────────────┐  ┌─402
│              Receive input sequences                           │
└──────────────────────────────────────────────────────────────┘
                                 │
                                 ▼
┌──────────────────────────────────────────────────────────────┐  ┌─404
│  Compute forward number-theoretic transforms of the input sequences │
└──────────────────────────────────────────────────────────────┘
                                 │
                                 ▼
┌──────────────────────────────────────────────────────────────┐  ┌─406
│  Perform modulo operations on the transformed sequences to obtain │
│              intermediate result vectors                       │
└──────────────────────────────────────────────────────────────┘
                                 │
                                 ▼
┌──────────────────────────────────────────────────────────────┐  ┌─408
│         Multiply the intermediate result vectors element-wise  │
└──────────────────────────────────────────────────────────────┘
                                 │
                                 ▼
┌──────────────────────────────────────────────────────────────┐  ┌─410
│         Compute inverse number-theoretic transform             │
└──────────────────────────────────────────────────────────────┘
                                 │
                                 ▼
┌──────────────────────────────────────────────────────────────┐  ┌─412
│              Perform modulo operations                         │
└──────────────────────────────────────────────────────────────┘
                                 │
                                 ▼
                          ┌─────────────┐
                          │     End     │
                          └─────────────┘
```

**FIG. 4**

Europäisches
Patentamt
European
Patent Office
Office européen
des brevets

# EUROPEAN SEARCH REPORT

Application Number

EP 20 19 5212

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | TOIVONEN T ET AL: "VIDEO FILTERING WITH FERMAT NUMBER THEORETIC TRANSFORMS USING RESIDUE NUMBER SYSTEM", IEEE TRANSACTIONS ON CIRCUITS AND SYSTEMS FOR VIDEO TECHNOLOGY, INSTITUTE OF ELECTRICAL AND ELECTRONICS ENGINEERS, US, vol. 16, no. 1, 1 January 2006 (2006-01-01), pages 92-101, XP001240872, ISSN: 1051-8215, DOI: 10.1109/TCSVT.2005.858612 * sections II, IV; figures 1, 3; table VI * | 1-15 | INV. G06F17/14 G06F7/57 G06F7/72 |
| A | BOURIDANE A ET AL: "CMOS VLSI CIRCUITS OF PIPELINE SECTIONS FOR 32 AND 64-POINT FERMAT NUMBER TRANSFORMERS", INTEGRATION, THE VLSI JOURNAL, NORTH-HOLLAND PUBLISHING COMPANY. AMSTERDAM, NL, vol. 8, no. 1, 1 October 1989 (1989-10-01), pages 51-64, XP000071849, ISSN: 0167-9260, DOI: 10.1016/0167-9260(89)90072-2 * section 2, 5 * | 1-15 | |
| A | JULLIEN G A: "IMPLEMENTATION OF MULTIPLICATION, MODULO A PRIME NUMBER, WITH APPLICATIONS TO NUMBER THEORETIC TRANSFORMS", IEEE TRANSACTIONS ON COMPUTERS, IEEE, USA, vol. C-29, no. 10, 1 October 1980 (1980-10-01), pages 899-905, XP000747977, ISSN: 0018-9340 * section I, V * | 1-15 | |

TECHNICAL FIELDS
SEARCHED (IPC)

G06F

The present search report has been drawn up for all claims

| Place of search | Date of completion of the search | Examiner |
|---|---|---|
| Munich | 19 January 2021 | Tenbieg, Christoph |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)